# EUROPÄISCHE PATENTSCHRIFT

(11) **EP 4 188 776 B1**
(45) Veröffentlichungstag und Bekanntmachung des Hinweises auf die Patenterteilung: **21.08.2024**
(21) Anmeldenummer: 21749184.4
(22) Anmeldetag: 26.07.2021
(51) Int. Cl.: B62D 21/11, B62D 25/20

(54) **VERSTEIFUNGSSTRUKTUR**
REINFORCING STRUCTURE
STRUCTURE DE RENFORCEMENT

(30) Priorität: 29.07.2020 DE 102020119946
(43) Veröffentlichungstag der Anmeldung: 07.06.2023
(73) Patentinhaber: Bayerische Motoren Werke Aktiengesellschaft, 80809 München (DE)
(72) Erfinder: GONDA, Mihaly, 85716 Unterschleißheim (DE); SCHOIERER, Tatjana, 85778 Haimhausen (DE); KRIEGLER, Lorenz, 85290 Rottenegg (DE)
(86) Internationale Anmeldenummer: PCT/EP2021/070791
(87) Internationale Veröffentlichungsnummer: WO 2022/023237

(56) Entgegenhaltungen:
- EP-A1- 3 118 086
- DE-A1- 102014 206 203
- DE-B3- 102013 007 005

## Beschreibung

Die vorliegende Erfindung betrifft eine Versteifungsstruktur für einen Unterboden eines Kraftfahrzeugs. Ferner betrifft die Erfindung ein Kraftfahrzeug, insbesondere einen Personenkraftwagen, umfassend eine derartige Versteifungsstruktur.

EP 3 118 086 A1 beschreibt einen Hilfsrahmen für ein Kraftfahrzeug, mit mindestens zwei Längsträgern, mindestens zwei Querträgern, welche die Längsträger miteinander verbinden und in Fahrzeuglängsrichtung voneinander beabstandet sind, Karosserie-Anbindungselementen, die an Trägerabschnitten des Hilfsrahmens angeordnet sind, und mit einer vorderen und einer hinteren Lenkeraufnahme je Fahrzeugseite, die in Fahrzeuglängsrichtung voneinander beabstandet sind. Je Fahrzeugseite ist mindestens eine Versteifungsstrebe vorgesehen, die an einen Abschnitt eines der Längsträger angeschlossen ist, welcher sich zwischen den Lenkeraufnahmen befindet, und die mit einem Endabschnitt an eines der Karosserie-Anbindungselemente oder an einen der seitlich nach außen vorstehenden Trägerabschnitte angeschlossen ist.

DE 10 2014 206203 A1 beschreibt eine Anordnung zur Erhöhung der Steifigkeit einer der Karosserie eines Kraftfahrzeugs, mit einem an einer Bodenstruktur der Karosserie akustisch entkoppelt befestigten Hilfsrahmen, wobei eine den Anordnungsbereich des Hilfsrahmens an der Bodenstruktur schneidende und außerhalb des besagten Anordnungsbereiches des Hilfsrahmens beidenends an der Bodenstruktur befestigte Verstärkungsstrebe vorgesehen ist, durch deren Zweiteilung der Hilfsrahmen als kraftübertragendes Element eingebunden ist.

DE 10 2013 007005 B3 beschreibt eine Radaufhängung für die Räder einer Hinterachse eines Kraftfahrzeugs, bei der die Radträger der Räder jeweils über mehrere Radführungselemente an einem gemeinsamen Achsträger gelagert sind. Der gemeinsame Achsträger ist über mehrere Achsträgerlager an einem Kraftfahrzeug-Karosserieteil gelagert. Unterhalb des Achsträgers ist ein über die Achsträgerlager zu befestigendes plattenförmiges Bauteil angeordnet, das in Fahrzeuglängsrichtung betrachtet an seiner vorderen Seite und an seiner hinteren Seite fest mit der FahrzeugKarosserie verbunden ist.

Aus dem Stand der Technik sind Fahrzeuge bekannt, die eine Versteifungsstruktur für einen Unterboden eines Fahrzeugs aufweisen. Insbesondere werden bei Fahrzeugen mit Panoramadach und Cabriolets Torsionsstreben im Bereich des hinteren Unterbodens verbaut, um funktionelle Nachteile zu kompensieren, die durch diese Bauform der Karosserie verursacht werden. Diese die Versteifungsstruktur bildenden Torsionsstreben werden in der Regel in einem vorderen Bereich des Kraftfahrzeugs an seitlichen Schwellern angebunden und in einem hinteren Bereich des Kraftfahrzeugs zentral an einem Achsträger oder an einer Gepäckraumwanne über einen Strebenbock mit der Karosserie verbunden. Beispielsweise wird in der EP 3 114 011 A1 eine solche Versteifungsstruktur eines Fahrzeugs in Form eines Schubfelds gezeigt.

Bei Fahrzeugen mit elektrischem Antrieb wird ein Hochvoltspeicher und ein elektrischer Antriebsstrang benötigt. Durch eine Integration des Hochvoltspeichers und des elektrischen Antriebstrangs in eine für Verbrennungsmotoren ausgelegte Bodengruppe entsteht ein großer Steifigkeitssprung zwischen einem mittleren Bereich eines Unterbodens und eines in Fahrzeuglängsrichtung hinteren Bereichs des Unterbodens. Zudem muss im Unterboden Bauraum für den elektrischen Antriebsstrang in Form einer großen Verprägung zur Verfügung gestellt werden, was die Funktion des oben beschriebenen Schubfelds beeinträchtigt.

Weitere Nachteile des Stands der Technik sind neben dem Steifigkeitssprung unter anderem, dass beide oben genannten Änderungen des Unterbodens bei elektrischen Fahrzeugen, d.h. die Integration des Hochvoltspeichers und die Verprägung, eine Verschlechterung einer Fahrdynamik und einer Fahrzeugakustik zur Folge haben.

Aufgabe der Erfindung ist es daher eine Vorrichtung bereitzustellen, die unter anderem ausgestaltet ist, die oben beschriebenen Nachteile aus dem Stand der Technik zu überwinden.

Diese Aufgabe wird erfindungsgemäß gelöst durch die Merkmale der unabhängigen Ansprüche. Vorteilhafte Ausgestaltungen sind in den Unteransprüchen angegeben.

Danach wird die Aufgabe gelöst durch eine Versteifungsstruktur für einen Unterboden eines Kraftfahrzeugs. Das Kraftfahrzeug weist einen Achsträger, insbesondere einen Hinterachsträger auf. Der Achsträger weist eine erste sowie eine zweite Achsträgeraufnahme auf, die in Fahrzeugquerrichtung voneinander beabstandet sind. Die Versteifungsstruktur weist eine Querverbundsstrebe sowie eine erste und eine zweite Achsträgeranbindung auf.

Die Versteifungsstruktur ist dadurch gekennzeichnet, dass die Querverbundsstrebe sowohl mit der ersten als auch mit der zweiten Achsträgeranbindung verbunden ist. Weiterhin ist die erste Achsträgeraufnahme mit der ersten Achsträgeranbindung und die zweite Achsträgeraufnahme mit der zweiten Achsträgeranbindung verbindbar.

Unter einem Achsträger kann hier ein mit einer Karosserie des Fahrzeugs verbindbarer Träger verstanden werden, der sich im Wesentlichen in Fahrzeugquerrichtung erstreckt. Der Achsträger kann insbesondere über Gummilager mit der Karosserie verbunden sein. Zu dem Achsträger können unter anderem Radaufhängungen des Kraftfahrzeugs verbunden sein.

Unter einer Querverbundsstrebe kann hier eine Strebe, insbesondere eine metallische, als Rohr ausgestaltete Strebe, verstanden werden, die sich im Wesentlichen in Fahrzeugquerrichtung erstreckt.

Da die Querverbundsstrebe mit der ersten und zweiten Achsträgeranbindung verbunden ist, kann durch eine Verbindung der ersten Achsträgeraufnahme mit der ersten Achsträgeranbindung und der zweiten Achsträgeraufnahme mit der zweiten Achsträgeranbindung ein Querverbund zwischen der ersten und der zweiten Achsträgeraufnahme erzeugt werden.

Dies resultiert in einer Erhöhung der Quersteifigkeit des Kraftfahrzeugs. Über diese Erhöhung der Quersteifigkeit kann eine erhöhte akustische Isolation und damit auch eine verbesserte Fahrzeugakustik erreicht werden.

Die Versteifungsstruktur kann ferner eine erste sowie eine zweite Abstützstrebe aufweisen, die jeweils in Fahrzeuglängsrichtung nach hinten verlaufen können. Die erste Abstützstrebe kann mit der ersten Achsträgeranbindung und die zweite Abstützstrebe kann mit der zweiten Achsträgeranbindung verbunden sein. Die Versteifungsstruktur kann eine erste sowie eine zweite Karosserieanbindung aufweisen, die jeweils ausgestaltet sein können, die Versteifungsstruktur mit einer Karosserie des Kraftfahrzeugs zu verbinden. Dabei kann die erste Karosserieanbindung von der ersten Achsträgeranbindung in Fahrzeuglängsrichtung beabstandet und mit der ersten Abstützstrebe verbunden sein. Die zweite Karosserieanbindung kann von der zweiten Achsträgeranbindung in Fahrzeuglängsrichtung beabstandet und mit der zweiten Abstützstrebe verbunden sein.

Unter einer Abstützstrebe kann hier eine Strebe, insbesondere eine metallische, als Rohr ausgestaltete Strebe, verstanden werden.

Dadurch, dass die erste Abstützstrebe mit der ersten Achsträgeranbindung und der ersten Karosserieanbindung verbunden sein kann, kann bei einer Verbindung der ersten Achsträgeranbindung mit der ersten Achsträgeraufnahme und einer Verbindung der ersten Karosserieanbindung mit der Karosserie die erste Achsträgeranbindung in Fahrzeuglängsrichtung abgestützt werden. Gleiches gilt für eine Verbindung der zweiten Abstützstrebe, der zweiten Achsträgeranbindung, der zweiten Karosserieanbindung, der zweiten Achsträgeraufnahme sowie der Karosserie.

Durch den durch die Querverbundsstrebe erzeugbaren Querverbund sowie die durch die Abstützstreben erzeugbare Abstützung in Fahrzeuglängsrichtung, insbesondere nach hinten, kann ein Steifigkeitssprung zwischen einem mittleren Bereich eines Unterbodens und eines hinteren Teils des Unterbodens, der beispielsweise durch eine Integration eines Hochvoltspeichers im Unterboden entsteht, kompensiert werden. Dadurch kann eine Fahrdynamik des Kraftfahrzeugs verbessert werden.

Die Versteifungsstruktur kann ferner ein mit der Querverbundsstrebe verbundenes Schubfeld sowie eine erste und eine zweite Diagonalstrebe aufweisen. Die erste Diagonalstrebe kann mit der ersten Karosserieanbindung sowie dem Schubfeld verbunden sein. Die zweite Diagonalstrebe kann mit der zweiten Karosserieanbindung und dem Schubfeld verbunden sein.

Unter einem Schubfeld kann hier ein Versteifungselement in Form eines versteiften Blechformstücks verstanden werden.

Unter einer Diagonalstrebe kann hier eine Strebe, insbesondere eine metallische, als Rohr ausgestaltete Strebe, verstanden werden.

Das Schubfeld kann eine Anbindung für eine Torsionsstrebe aufweisen. Die Torsionsstrebe kann an der Anbindung über eine, insbesondere zwei, Verschraubung(en) zum Schubfeld verbindbar sein. Die Anbindung kann insbesondere mit einem U-Profil umrahmt sein.

Unter einer Torsionsstrebe kann hier eine Strebe verstanden werden, die im und/oder am Unterboden des Kraftfahrzeugs verbaut ist, diagonal zwischen Fahrzeuglängsrichtung und Fahrzeugquerrichtung verläuft und zur Erhöhung der Torsionssteifigkeit der Karosserie des Fahrzeugs dient.

Unter einem U-Profil kann hier ein insbesondere metallisches Profil verstanden werden, das im Querschnitt im Wesentlichen eine U-Form aufweist.

Durch die Umrahmung der Verschraubung mit dem U-Profil kann zusammen mit dem Schubfeld ein geschlossenes Profil gebildet werden, das eine notwendige Steifigkeit für die Anbindung der Torsionsstrebe aufweisen kann.

Die Versteifungsstruktur kann weitere, insbesondere zwei weitere, Karosserieanbindungen aufweisen. Die weiteren Karosserieanbindungen können jeweils ausgestaltet sein, die Versteifungsstruktur mit der Karosserie des Kraftfahrzeugs zu verbinden.

Die erste Karosserieanbindung, die zweite Karosserieanbindung, die weiteren Karosserieanbindungen, die erste Achsträgeranbindung und/oder die zweite Achsträgeranbindung können jeweils als Rohrstück insbesondere mit einer separaten, zum Rohrstück verbundenen Bodenplatte ausgestaltet sein.

Die Verbindung zwischen Rohrstück und Bodenplatte kann insbesondere eine Schweißverbindung sein. Ein Vorteil einer separaten Verbindung von Rohrstück und Bodenplatte ist, dass Toleranzen in Fahrzeughöhenrichtung eingestellt werden können.

Die Versteifungsstruktur kann eine Kunststoffabdeckung aufweisen. Die Kunststoffabdeckung kann mit dem Schubfeld so verbunden sein, dass ein Luftspalt zwischen der Kunststoffabdeckung und dem Schubfeld ausgebildet ist.

Durch den Luftspalt kann eine Lüftung zwischen der Kunststoffabdeckung und dem Schubfeld ermöglicht werden. Dadurch kann eine dauerhafte Feuchtigkeit zwischen dem metallischen Schubfeld und der Kunststoffabdeckung verhindert werden, was einem Korrosionsschutz dient.

Die Kunststoffabdeckung kann zudem so vorgesehen sein, dass sie die restliche Versteifungsstruktur zumindest teilweise abdeckt, um so einen möglichst geringen Luftwiderstandsbeiwert zu erreichen.

Das Schubfeld kann Sicken für einen Auffahrschutz aufweisen. Unter Sicken können hier rinnenförmige Vertiefungen in einem Blechbauteil verstanden werden, die unter anderem für eine Versteifung und damit gegen eine Verformung des Schubfelds dienen können.

Die Versteifungsstruktur kann mit einer Hochtemperatur-Verzinkung (HTV) beschichtet sein.

Unter der Hochtemperatur-Verzinkung kann hier ein Verfahren für eine Beschichtung von Metallbauteilen verstanden werden, bei der Metallbauteile unter anderem in eine flüssige Zinkschmelze getaucht werden. Die Zinkschmelze kann dabei eine Temperatur von über 530 °C aufweisen. Diese Beschichtung dient zum Schutz gegen Korrosion.

Die Erfindung betrifft weiterhin ein Kraftfahrzeug. Das Kraftfahrzeug kann ein Personenkraftwagen sein. Das Kraftfahrzeug umfasst die oben beschriebene Versteifungsstruktur.

Das Kraftfahrzeug kann einen Achsträger, insbesondere einen Hinterachsträger, aufweisen. Der Achsträger kann eine erste sowie eine zweite Achsträgeraufnahme aufweisen, die in Fahrzeugquerrichtung voneinander beabstandet sein können. Die Versteifungsstruktur kann eine Querverbundsstrebe sowie eine erste und eine zweite Achsträgeranbindung aufweisen. Die Querverbundsstrebe kann sowohl mit der ersten als auch mit der zweiten Achsträgeranbindung verbunden sein. Die erste Achsträgeraufnahme kann mit der ersten Achsträgeranbindung und die zweite Achsträgeraufnahme mit der zweiten Achsträgeranbindung verbunden sein.

Weiterhin gilt das oben zur Versteifungsstruktur Beschriebene analog auch für das Kraftfahrzeug und vice versa.

Das Kraftfahrzeug kann in und/oder an einem Unterboden davon einen Energiespeicher, insbesonder für elektrische Energie, aufweisen. Das Kraftfahrzeug kann ein Elketro- und/oder Hybridfahrzeug sein.

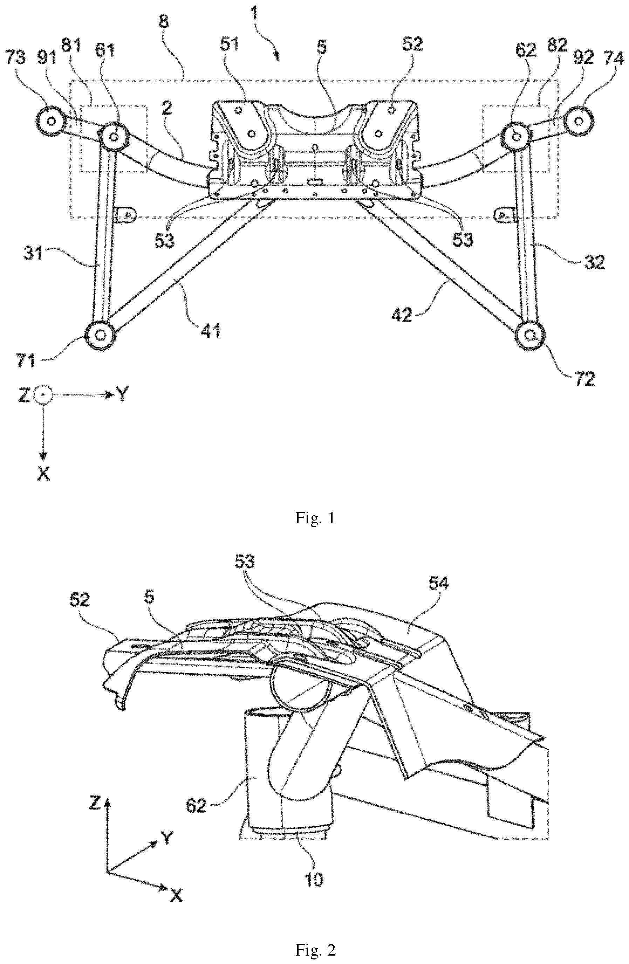

Nachfolgend wird eine Ausführungsform mit Bezug zu Figuren 1 und 2 beschrieben.
- Fig. 1: zeigt schematisch eine Versteifungsstruktur eines Unterbodens eines Kraftfahrzeugs gemäß der Ausführungsform.
- Fig. 2: zeigt schematisch eine Teilschnittansicht der in Figur 1 gezeigten Versteifungsstruktur.

Figur 1 ist eine Darstellung einer Versteifungsstruktur 1 eines Unterbodens eines Kraftfahrzeugs.

Weiterhin ist ein kartesisches Koordinatensystem gezeigt, wobei X die Fahrzeuglängsrichtung, Y die Fahrzeugquerrichtung und Z die Fahrzeughöhenrichtung des Kraftfahrzeugs darstellt. Die Pfeilrichtung der Fahrzeuglängsrichtung X verläuft von einer Front des Kraftfahrzeugs zu einem Heck des Kraftfahrzeugs, d.h. entgegen einer Hauptfahrrichtung.

In Figur 1 ist ein Hinterachsträger 8 schematisch angedeutet. Der Hinterachsträger 8 umfasst eine erste und eine zweite Achsträgeraufnahme 81, 82, die ebenfalls schematisch angedeutet sind.

Die Versteifungsstruktur 1 umfasst eine Querverbundsstrebe 2, zwei Abstützstreben 31, 32, zwei Diagonalstreben 41, 42, ein Schubfeld 5, zwei Achsträgeranbindungen 61, 62, vier Karosserieanbindungen 71, 72, 73, 74 sowie zwei Verbindungsstreben 91, 92.

Das Schubfeld 5 ist mit der Querverbundsstrebe 2 verbunden. Das Schubfeld 5 umfasst zwei Anbindungen 51, 52 für jeweils ein Ende in Längsrichtung einer in Figur 1 nicht dargestellten Torsionsstrebe und vier Sicken 53. Die Torsionsstreben können an ihrem anderen Ende in Längsrichtung, das nicht mit dem Schubfeld 5 vebunden ist, jeweils mit einer Karosserie des Kraftfahrzeugs verbunden sein.

Genauer gesagt ist das Schubfeld 5 so ausgestaltet, dass je eine Torsionsstrebe der zwei Torsionsstreben zu der Anbindung 51 beziehungsweise zu der Anbindung 52 über jeweils zwei Schraubverbindungen verbindbar ist. Die Anbindungen 51, 52 werden jeweils durch ein U-Profil (nicht gezeigt) umrahmt. Die Sicken 53 dienen einem Auffahrschutz.

Die Querverbundsstrebe 2 ist zum Hinterachsträger 8 des Kraftfahrzeugs verbunden. Dazu weist die Versteifungsstruktur 1 die erste sowie die zweite Achsträgeranbindung 61, 62 auf, die jeweils mit der Querverbundsstrebe 2 verbunden sind.

Der Hinterachsträger 8 weist, wie oben beschrieben, die erste und die zweite Achsträgeraufnahme 81, 82 auf, die in Fahrzeugquerrichtung Y voneinander beabstandet und mit der ersten und der zweiten Achsträgeranbindung 61, 62 verbunden sind. Genauer gesagt, ist die erste Achsträgeraufnahme 81 mit der ersten Achsträgeranbindung 61 und die zweite Achsträgeraufnahme 82 mit der zweiten Achsträgeranbindung 62 verbunden.

Weiterhin ist mit der ersten Achsträgeranbindung 61 die erste Abstützstrebe 31 verbunden und mit der zweiten Achsträgeranbindung 62 ist die zweite Abstützstrebe 32 verbunden.

Die vier Karosserieanbindungen 71, 72, 73, 74 sind vorgesehen, um die Versteifungsstruktur 1 mit der Karosserie des Kraftfahrzeugs zu verbinden.

Dabei ist eine erste der vier Karosserieanbindungen 71 von der ersten Achsträgeranbindung 61 in Fahrzeuglängsrichtung X beabstandet und mit der ersten Abstützstrebe 31 verbunden. Gleiches gilt für eine zweite der vier Karosserieanbindungen 72, die von der zweiten Achsträgeranbindung 62 in Fahrzeuglängsrichtung X beabstandet und mit der zweiten Abstützstrebe 32 verbunden ist. Die anderen beiden Karosserieanbindungen 73, 74 sind in Fahrzeuglängsrichtung X im Wesentlichen auf derselben Höhe wie die zwei Achsträgeranbindungen 61, 62 angeordnet.

Die erste Diagonalstrebe 41 ist sowohl mit der ersten Karosserieanbindung 71 als auch mit dem Schubfeld 5 verbunden. Gleiches gilt für die zweite Diagonalstrebe 42, die sowohl mit der zweiten Karosserieanbindung 72 als auch mit dem Schubfeld 5 verbunden ist.

Die erste Verbindungsstrebe 91 ist mit der ersten Achsträgeranbindung 61 verbunden. Eine dritte der vier Karosserieanbindungen 73 ist von der ersten Achsträgeranbindung 61 in Fahrzeugquerrichtung Y beabstandet und mit der ersten Verbindungsstrebe 91 verbunden. Gleiches gilt für die zweite Verbindungsstrebe 92, die mit der zweiten Achsträgeranbindung 62 verbunden ist. Eine vierte der vier Karosserieanbindungen 74 ist von der zweiten Achsträgeranbindung 62 in Fahrzeugquerrichtung Y beabstandet und mit der zweiten Verbindungsstrebe 92 verbunden.

Wie der Figur 1 zu entnehmen ist, ist die Versteifungsstruktur 1 damit achsensymmetrisch bezüglich einer Achse, die parallel zur Fahrzeuglängsrichtung X verläuft, ausgebildet.

Die Figur 2 ist eine schematische Teilschnittansicht der Versteifungsstruktur 1.

Der in Figur 2 gezeigte Ausschnitt des Schubfelds 5 entspricht einem Teil des in Figur 1 gezeigten Schubfelds 5. Weiterhin ist in der Figur 2 die zweite Achsträgeranbindung 62 gezeigt.

Die Versteifungsstruktur 1 umfasst eine Kunststoffabdeckung 54 und die zweite Achsträgeranbindung 62 umfasst eine Bodenplatte 10.

Die Kunststoffabdeckung 54 ist mit dem Schubfeld 5 so verbunden, dass zwischen Kunststoffabdeckung 54 und Schubfeld 5 ein Luftspalt ausgebildet ist.

Die Bodenplatte 10 ist mit der zweiten Achsträgeranbindung 62 verbunden. Die Verbindung kann eine Schweißverbindung sein. In gleicher Weise ist mit der ersten Achsträgeranbindung 61, und der ersten, der zweiten, der dritten und der vierten Karosserieanbindung 71, 72, 73, 74 jeweils eine Bodenplatte 10 verbunden (nicht dargestellt).

Die oben beschriebene Ausführungsform der Versteifungsstruktur 1 erzeugt einen Querverbund zwischen der ersten Achsträgeraufnahme 81 und der zweiten Achsträgeraufnahme 82 durch eine Verbindung der ersten Achsträgeraufnahme 81 mit der ersten Achsträgeranbindung 61 sowie eine Verbindung der zweiten Achsträgeraufnahme 82 mit der zweiten Achsträgeranbindung 62.

Weiterhin wird durch die Verbindung zwischen der ersten Karosserieanbindung 71 und der Karosserie mithilfe der ersten Abstützstrebe 31 die Achsträgeraufnahme 81 in Fahrzeuglängsrichtung X abgestützt. Durch die Verbindung zwischen der zweiten Karosserieanbindung 72 und der Karosserie wird mithilfe der zweiten Abstützstrebe 32 die Achsträgeraufnahme 82 in Fahrzeuglängsrichtung X abgestützt. Das heißt, die beiden Abstützstreben 31, 32 stützen die Versteifungsstruktur 1 in Fahrzeuglängsrichtung X ab.

Durch die oben Beschriebene Versteifungsstruktur 1, insbesondere durch die Abstützung dieser in Fahrzeuglängsrichtung X und die Querverbundsstrebe 2, können die eingangs beschriebenen Nachteile des Stands der Technik, insbesondere die Verschlechterung der Fahrdynamik und der Fahrzeugakustik, die bei einer Integration eines Hochvoltspeichers und eines elektrischen Antriebsstrangs in eine für Verbrennungsmotoren ausgelegte Bodengruppe auftreten, kompensiert werden.

### Bezugszeichenliste

- 1: Versteifungsstruktur
- 2: Querverbundsstrebe
- 31: erste Abstützstrebe
- 32: zweite Abstützstrebe
- 41: erste Diagonalstrebe
- 42: zweite Diagonalstrebe
- 5: Schubfeld
- 51, 52: Anbindung für Torsionsstrebe
- 53: Sicken
- 54: Kunststoffabdeckung
- 61: erste Achsträgeranbindung
- 62: zweite Achsträgeranbindung
- 71: erste Karosserieanbindung
- 72: zweite Karosserieanbindung
- 73: dritte Karosserieanbindung
- 74: vierte Karosserieanbindung
- 8: Hinterachsträger
- 81: erste Achsträgeraufnahme
- 82: zweite Achsträgeraufnahme
- 91: erste Verbindungsstrebe
- 92: zweite Verbindungsstrebe
- 10: Bodenplatte

## Patentansprüche

1. Eine Versteifungsstruktur (1) für einen Unterboden eines Kraftfahrzeugs,
- wobei das Kraftfahrzeug einen Achsträger (8), insbesondere einen Hinterachsträger, aufweist, wobei der Achsträger (8) eine erste sowie eine zweite Aufnahme (81, 82) aufweist, die in Fahrzeugquerrichtung (Y) voneinander beabstandet sind,
- wobei die Versteifungsstruktur (1) eine Querverbundsstrebe (2) sowie eine erste und eine zweite Achsträgeranbindung (61, 62) aufweist,
**dadurch gekennzeichnet, dass**
- die Querverbundsstrebe (2) sowohl mit der ersten als auch mit der zweiten Achsträgeranbindung (61, 62) verbunden ist, und
- die erste Aufnahme (81) des Achsträgers (8) mit der ersten Achsträgeranbindung (61) verbindbar ist und die zweite Aufnahme (82) des Achsträgers (8) mit der zweiten Achsträgeranbindung (62) verbindbar ist.

2. Versteifungsstruktur (1) gemäß Anspruch 1, **dadurch gekennzeichnet, dass**
- die Versteifungsstruktur (1) eine erste sowie eine zweite Abstützstrebe (31, 32) aufweist, die jeweils in Fahrzeuglängsrichtung (X) nach hinten verlaufen,
- die erste Abstützstrebe (31) mit der ersten Achsträgeranbindung (61) verbunden ist und die zweite Abstützstrebe (32) mit der zweiten Achsträgeranbindung (62) verbunden ist,
- die Versteifungsstruktur (1) eine erste sowie eine zweite Karosserieanbindung (71, 72) aufweist, die jeweils ausgestaltet sind, die Versteifungsstruktur (1) mit einer Karosserie des Kraftfahrzeugs zu verbinden, und
- die erste Karosserieanbindung (71) von der ersten Achsträgeranbindung (61) in Fahrzeuglängsrichtung (X) beabstandet und mit der ersten Abstützstrebe (31) verbunden ist, und
- die zweite Karosserieanbindung (72) von der zweiten Achsträgeranbindung (62) in Fahrzeuglängsrichtung (X) beabstandet und mit der zweiten Abstützstrebe (32) verbunden ist.

3. Versteifungsstruktur (1) gemäß Anspruch 2, **dadurch gekennzeichnet, dass**
- die Versteifungsstruktur (1) ein mit der Querverbundsstrebe (2) verbundenes Schubfeld (5) sowie eine erste und eine zweite Diagonalstrebe (41, 42) aufweist,
- wobei die erste Diagonalstrebe (41) mit der ersten Karosserieanbindung (71) sowie dem Schubfeld (5) verbunden ist, und
- wobei die zweite Diagonalstrebe (42) mit der zweiten Karosserieanbindung (72) und dem Schubfeld (5) verbunden ist.

4. Versteifungsstruktur (1) gemäß einem der Ansprüche 1 bis 3, **dadurch gekennzeichnet, dass**
- das Schubfeld (5) eine Anbindung (51, 52) für eine Torsionsstrebe aufweist,
- wobei die Torsionsstrebe an der Anbindung (51, 52) insbesondere über eine, insbesondere zwei, Verschraubungen zum Schubfeld verbindbar ist, und
- wobei die Anbindung (51, 52) insbesondere mit einem U-Profil umrahmt ist.

5. Versteifungsstruktur (1) gemäß einem der vorangehenden Ansprüche, **dadurch gekennzeichnet, dass**
- die Versteifungsstruktur (1) weitere, insbesondere zwei weitere, Karosserieanbindungen (73, 74) aufweist, die jeweils ausgestaltet sind, die Versteifungsstruktur (1) mit der Karosserie des Kraftfahrzeugs zu verbinden, und
- die erste Karosserieanbindung (71), die zweite Karosserieanbindung (72), die weiteren Karosserieanbindungen (73, 74), die erste Achsträgeranbindung (61) und/oder die zweite Achsträgeranbindung (62) insbesondere als Rohrstück mit einer separaten, zum Rohrstück verbundenen Bodenplatte (10) ausgestaltet sind.

6. Versteifungsstruktur (1) gemäß einem der vorangehenden Ansprüche, **dadurch gekennzeichnet, dass**
- die Versteifungsstruktur (1) eine Kunststoffabdeckung (54) aufweist, die mit dem Schubfeld (5) so verbunden ist, dass ein Luftspalt zwischen der Kunststoffabdeckung (54) und dem Schubfeld (5) ausgebildet ist.

7. Versteifungsstruktur (1) gemäß einem der vorangehenden Ansprüche, **dadurch gekennzeichnet, dass**
- das Schubfeld (5) Sicken (53) für einen Auffahrschutz aufweist.

8. Versteifungsstruktur (1) gemäß einem der vorangehenden Ansprüche, **dadurch gekennzeichnet, dass**
- die Versteifungsstruktur (1) mit einer Hochtemperatur-Verzinkung beschichtet ist.

9. Kraftfahrzeug, insbesondere ein Personenkraftwagen, mit
- einer Versteifungsstruktur (1) gemäß einem der vorangehenden Ansprüche.

10. Kraftfahrzeug gemäß Anspruch 9,
- wobei das Kraftfahrzeug einen Achsträger (8), insbesondere einen Hinterachsträger, aufweist,
- wobei der Achsträger (8) eine erste sowie eine zweite Aufnahme (81, 82) aufweist, die in Fahrzeugquerrichtung (Y) voneinander beabstandet sind,
- wobei die Versteifungsstruktur (1) eine Querverbundsstrebe (2) sowie eine erste und eine zweite Achsträgeranbindung (61, 62) aufweist,
**dadurch gekennzeichnet, dass**
- die Querverbundsstrebe (2) sowohl mit der ersten als auch mit der zweiten Achsträgeranbindung (61, 62) verbunden ist, und
- die erste Aufnahme (81) des Achsträgers (8) mit der ersten Achsträgeranbindung (61) verbunden ist und die zweite Aufnahme (82) des Achsträgers (8) mit der zweiten Achsträgeranbindung (62) verbunden ist.

## Claims

1. Reinforcing structure (1) for an underbody of a motor vehicle,
- wherein the motor vehicle has an axle support (8), in particular a rear axle support, wherein the axle support (8) has a first and a second holder (81, 82) which are spaced apart from one another in a transverse direction of the vehicle (Y),
- wherein the reinforcing structure (1) has a transverse connecting strut (2) and a first and a second axle support linkage (61, 62),
**characterized in that**
- the transverse connecting strut (2) is connected both to the first and to the second axle support linkage (61, 62), and
- the first holder (81) of the axle support (8) can be connected to the first axle support linkage (61) and the second holder (82) of the axle support (8) can be connected to the second axle support linkage (62).

2. Reinforcing structure (1) according to Claim 1, **characterized in that**
- the reinforcing structure (1) has a first and a second supporting strut (31, 32), each of which runs towards the back in the longitudinal direction of the vehicle (X),
- the first support strut (31) is connected to the first axle support linkage (61) and the second support strut (32) is connected to the second axle support linkage (62),
- the reinforcing structure (1) has a first and a second body linkage (71, 72) which are configured, in each case, to connect the reinforcing structure (1) to a body of the motor vehicle, and
- the first body linkage (71) is spaced apart from the first axle support linkage (61) in the longitudinal direction of the vehicle (X) and is connected to the first support strut (31), and
- the second body linkage (72) is spaced apart from the second axle support linkage (62) in the longitudinal direction of the vehicle (X) and is connected to the second support strut (32).

3. Reinforcing structure (1) according to Claim 2, **characterized in that**
- the reinforcing structure (1) has a shear panel (5) connected to the transverse connecting strut (2) and also a first and a second diagonal strut (41, 42),
- wherein the first diagonal strut (41) is connected to the first body linkage (71) and also to the shear panel (5), and
- wherein the second diagonal strut (42) is connected to the second body linkage (72) and the shear panel (5).

4. Reinforcing structure (1) according to one of Claims 1 to 3, **characterized in that**
- the shear panel (5) has a linkage (51, 52) for a torsion strut,
- wherein the torsion strut is connectable at the linkage (51, 52) in particular via one, in particular two, screw connection(s) to the shear panel, and
- wherein the linkage (51, 52) is framed, in particular by a U-shaped profile.

5. Reinforcing structure (1) according to one of the preceding claims, **characterized in that**
- the reinforcing structure (1) has further, in particular two further, body linkages (73, 74), which are each be designed to connect the reinforcing structure (1) to the body of the motor vehicle,
and
- the first body linkage (71), the second body linkage (72), the further body linkages (73, 74), the first axle support linkage (61) and/or the second axle support linkage (62) are configured as a pipe section with a separate baseplate (10) connected to the pipe section.

6. Reinforcing structure (1) according to one of the preceding claims, **characterized in that**
- the reinforcing structure (1) has a plastic cover (54) which is connected to the shear panel (5) in such a manner that an air gap is formed between the plastic cover (54) and the shear panel (5).

7. Reinforcing structure (1) according to one of the preceding claims, **characterized in that**
- the shear panel (5) has corrugations (53) for impact protection.

8. Reinforcing structure (1) according to one of the preceding claims, **characterized in that**
- the reinforcing structure (1) is coated using high-temperature galvanizing.

9. Motor vehicle, in particular an automobile, having
- a reinforcing structure (1) according to one of the preceding claims.

10. Motor vehicle according to Claim 9,
- wherein the motor vehicle has an axle support (8), in particular a rear axle support,
- wherein the axle support (8) has a first and a second axle support holder (81, 82), which are spaced apart from one another in the transverse direction of the vehicle (Y),
- wherein the reinforcing structure (1) has a transverse connecting strut (2) and a first and a second axle support linkage (61, 62),
**characterized in that**
- the transverse connecting strut (2) is connected both to the first and to the second axle support linkage (61, 62), and
- the first holder (81) of the axle support (8) is connected to the first axle support linkage (61) and the second axle holder (82) of the axle support (8) is connected to the second axle support linkage (62).

## Revendications

1. Structure de renforcement (1) pour un dessous de caisse d'un véhicule automobile,
- le véhicule automobile présentant un support d'essieu (8), notamment un support d'essieu arrière, le support d'essieu (8) présentant un premier ainsi qu'un deuxième logement (81, 82) qui sont espacés l'un de l'autre dans la direction transversale du véhicule (Y),
- la structure de renforcement (1) présentant une entretoise de liaison transversale (2) ainsi qu'une première et une deuxième liaison de support d'essieu (61, 62),
**caractérisée en ce que**
- l'entretoise de liaison transversale (2) est reliée à la fois à la première et à la deuxième liaison de support d'essieu (61, 62), et
- le premier logement (81) du support d'essieu (8) peut être relié à la première liaison de support d'essieu (61) et le deuxième logement (82) du support d'essieu (8) peut être relié à la deuxième liaison de support d'essieu (62) .

2. Structure de renforcement (1) selon la revendication 1, **caractérisée en ce que**
- la structure de renforcement (1) présente une première ainsi qu'une deuxième entretoise d'appui (31, 32) qui s'étendent respectivement vers l'arrière dans la direction longitudinale du véhicule (X),
- la première entretoise d'appui (31) est reliée à la première liaison de support d'essieu (61) et la deuxième entretoise d'appui (32) est reliée à la deuxième liaison de support d'essieu (62),
- la structure de renforcement (1) présente une première ainsi qu'une deuxième liaison de carrosserie (71, 72), qui sont respectivement conçues pour relier la structure de renforcement (1) à une carrosserie du véhicule automobile, et
- la première liaison de carrosserie (71) est espacée de la première liaison de support d'essieu (61) dans la direction longitudinale du véhicule (X) et est reliée à la première entretoise d'appui (31), et
- la deuxième liaison de carrosserie (72) est espacée de la deuxième liaison de support d'essieu (62) dans la direction longitudinale du véhicule (X) et est reliée à la deuxième entretoise d'appui (32).

3. Structure de renforcement (1) selon la revendication 2, **caractérisée en ce que** :
- la structure de renforcement (1) présente un panneau de poussée (5) relié à l'entretoise de liaison transversale (2) ainsi qu'une première et une deuxième entretoise diagonale (41, 42),
- la première entretoise diagonale (41) étant reliée à la première liaison de carrosserie (71) ainsi qu'au panneau de poussée (5), et
- la deuxième entretoise diagonale (42) étant reliée à la deuxième liaison de carrosserie (72) et au panneau de poussée (5).

4. Structure de renforcement (1) selon l'une quelconque des revendications 1 à 3, **caractérisée en ce que**
- le panneau de poussée (5) présente une liaison (51, 52) pour une entretoise de torsion,
- l'entretoise de torsion pouvant être reliée au panneau de poussée au niveau de la liaison (51, 52) notamment par l'intermédiaire d'un, notamment de deux, vissages, et
- la liaison (51, 52) étant notamment encadrée par un profilé en U.

5. Structure de renforcement (1) selon l'une quelconque des revendications précédentes, **caractérisée en ce que**
- la structure de renforcement (1) présente d'autres, notamment deux autres, liaisons de carrosserie (73, 74) qui sont conçues chacune pour relier la structure de renforcement (1) à la carrosserie du véhicule automobile, et
- la première liaison de carrosserie (71), la deuxième liaison de carrosserie (72), les autres liaisons de carrosserie (73, 74), la première liaison de support d'essieu (61) et/ou la deuxième liaison de support d'essieu (62) sont conçues notamment sous forme de pièce tubulaire avec une plaque de fond (10) séparée, reliée à la pièce tubulaire.

6. Structure de renforcement (1) selon l'une quelconque des revendications précédentes, **caractérisée en ce que** :
- la structure de renforcement (1) présente un couvercle en matière plastique (54) qui est relié au panneau de poussée (5) de telle sorte qu'un espace d'air est réalisé entre le couvercle en matière plastique (54) et le panneau de poussée (5).

7. Structure de renforcement (1) selon l'une quelconque des revendications précédentes, **caractérisée en ce que** :
- le panneau de poussée (5) présente des moulures (53) pour une protection contre les chocs.

8. Structure de renforcement (1) selon l'une quelconque des revendications précédentes, **caractérisée en ce que** :
- la structure de renforcement (1) est revêtue d'une galvanisation à haute température.

9. Véhicule automobile, notamment voiture particulière, avec :
- une structure de renforcement (1) selon l'une quelconque des revendications précédentes.

10. Véhicule automobile selon la revendication 9,
- le véhicule automobile présentant un support d'essieu (8), notamment un support d'essieu arrière,
- le support d'essieu (8) présentant un premier ainsi qu'un deuxième logement (81, 82) qui sont espacés l'un de l'autre dans la direction transversale du véhicule (Y),
- la structure de renforcement (1) présentant une entretoise de liaison transversale (2) ainsi qu'une première et une deuxième liaison de support d'essieu (61, 62),
**caractérisé en ce que**
- l'entretoise de liaison transversale (2) est reliée à la fois à la première et à la deuxième liaison de support d'essieu (61, 62), et
- le premier logement (81) du support d'essieu (8) est relié à la première liaison de support d'essieu (61) et le deuxième logement (82) du support d'essieu (8) est relié à la deuxième liaison de support d'essieu (62).
